# NEUE EUROPÄISCHE PATENTSCHRIFT

(11) **EP 3 405 366 B2**
(45) Veröffentlichungstag und Bekanntmachung des Hinweises auf die Entscheidung über den Einspruch: **09.12.2026**
(45) Hinweis auf die Patenterteilung: 07.07.2021
(21) Anmeldenummer: 17703336.2
(22) Anmeldetag: 18.01.2017
(51) Int. Cl.: B60R 13/00, B60Q 1/26

(54) **BELEUCHTETES MARKENEMBLEM**
MANUFACTURER'S EMBLEM WITH BACK-LIGHTING
EMBLÈME ÉCLAIRÉ

(30) Priorität: 18.01.2016 DE 202016000238 U
(43) Veröffentlichungstag der Anmeldung: 28.11.2018
(60) Teilanmeldung: 21168642.3 / 3 878 695
(73) Patentinhaber: Gerhardi Lüdenscheid GmbH, 58511 Lüdenscheid (DE)
(72) Erfinder: KIESLICH, Dirk, 58840 Plettenberg (DE)
(74) Vertreter: Patentanwälte Dörner & Kötter PartG mbB
(86) Internationale Anmeldenummer: PCT/EP2017/051008
(87) Internationale Veröffentlichungsnummer: WO 2017/125450

(56) Entgegenhaltungen:
- EP-A1- 2 311 689
- EP-A2- 0 791 911
- EP-A2- 0 954 052
- WO-A1-2014/120757
- DE-T5- 112014 000 598
- DE-U1- 202005 010 582
- DE-U1- 202016 000 238
- JP-A- 2014 160 157
- US-A1- 2011 052 839

## Beschreibung

Die Erfindung betrifft ein vollflächig oder partiell beleuchtetes Markenemblem, für den Einsatz im Interieur sowie im Exterieur im Automobilsektor.

Im Automobilsektor wird zwischen dem Innenraumbereich des Fahrzeugs, dem sog. Interieur, sowie dem Außenbereich des Fahrzeugs, dem sog. Exterieur, unterschieden. Die hier betrachteten beleuchteten Markenembleme finden verstärkt im Automobilsektor Einsatz, um die Markenerkennung auch bei Dämmerlicht oder völliger Dunkelheit sicherzustellen oder für sogenannte Coming-Home-Funktionen, bei denen beim Nähern und Öffnen des Fahrzeugs mehrere Exterieurelemente, so auch die Markenembleme, beleuchtet werden, um zum Beispiel für den Benutzer das Auffinden seines Fahrzeugs beispielsweise auf großen Parkplätzen oder in Parkhäusern zu erleichtern.

Aus den Schriften DE 10 2014 015 185 und DE 20 2009 012 788 sind Dekorelemente bekannt, welche Ausführungsformen eines beleuchteten Markenemblems beschreiben. In der DE 10 2014 015 185 ist die Beleuchtung hinter dem chromoptischen Dekorelement angeordnet und wird auf das dahinterliegende und das Dekorelement aufnehmende Trägerbauteil geworfen. In der DE 20 2009 012 788 wird direkt das chromoptische Dekorelement durchleuchtet. Beide Ausführungsformen haben jedoch den Nachteil, ein Bauteil zur Verfügung zu stellen, bei dem die Lichtinszenierung nur bei einer direkten Betrachtung von vorne auf das Markenemblem die Anforderungen erfüllt, jedoch bei versetztem, seitlichen Blickwinkel durch die geometrische Ausführung des Markenemblems lichtinszenierte, beleuchtete Bereiche verdeckt.

Aus der US 2011/0052839 A1 ist zudem ein Markenemblem für Kraftfahrzeuge bekannt, das aus einem Gehäuse besteht, welches einen Durchbruch hat. In das Gehäuse sind eine hintere und eine vordere Linse einsetzbar, zwischen denen ein Schriftzug anbringbar ist. Das Emblem kann von einem Lichtring umgeben sein. Weiterhin ist aus der EP 0 954 052 A2 ein als Radom ausgebildetes Firmenemblem bekannt.

Mit beiden Ausführungen wird der Trend in der Automobilindustrie nach beleuchteten Markenemblemen, bei denen unabhängig vom Betrachtungswinkel die lichtinszenierten Bereiche sichtbar sind, nicht erfüllt.

Vor diesem Hintergrund liegt der Erfindung die Aufgabe zugrunde, ein vollflächig oder partiell beleuchtetes Markenemblem zur Verfügung zu stellen, welches unabhängig vom Betrachtungswinkel für den Einsatz im Interieur sowie im Exterieur einsetzbar ist und bevorzugt kompakt aufbaut, im Verbund fertigbar ist und filigrane variable Konturlichtlösungen realisierbar macht. Gemäß der Erfindung wird diese Aufgabe mit den Merkmalen des Patentanspruchs 1 gelöst.

Mit der Erfindung ist ein vollflächig oder partiell beleuchtetes Markenemblem geschaffen, welches unabhängig vom Betrachtungswinkel für den Einsatz im Interieur sowie im Exterieur einsetzbar ist und bevorzugt kompakt aufbaut, im Verbund fertigbar ist und filigrane variable Konturlichtlösungen realisierbar macht. Durch die Verwendung der Linse lassen sich optische Effekte erzielen, die ein dreidimensionales Aussehen des Markenemblems bewirken, gleichzeitig aber sehr flach bauen und so auch eine Erkennung der Kontur des Markenemblems auch bei seitlicher Betrachtung ermöglichen.

Erfahrungsgemäß werden Markenembleme wie sie zum Beispiel in der Automobilindustrie eingesetzt werden, aus chromoptischen Elementen gebildet. Chromoptische Elemente als Markenemblemen vermitteln in der Regel eine hohe Wertigkeit und Lebensdauer. Im Einsatz sind heute meist galvanisch dekorierte Elemente aus Kunststoff, wobei jedoch auch chromoptische Imitate auf Basis einer Metallabscheidung wie PVD, PECVD, CVD oder Vakuumbedampfung auf Kunststoffbauteile im Einsatz sind. Auch chromoptische Beschichtungen auf Folien, welche anschließend in Kontur verformt und hinterspritzt werden sind möglich. Ebenso sind bedingt chromoptische Lackierungen möglich. Ein Einsatz von Echtmetallfolien ist ebenso denkbar.

Nachfolgend wird die Erfindung unter Bezugnahme auf die Zeichnung näher erläutert, wobei:

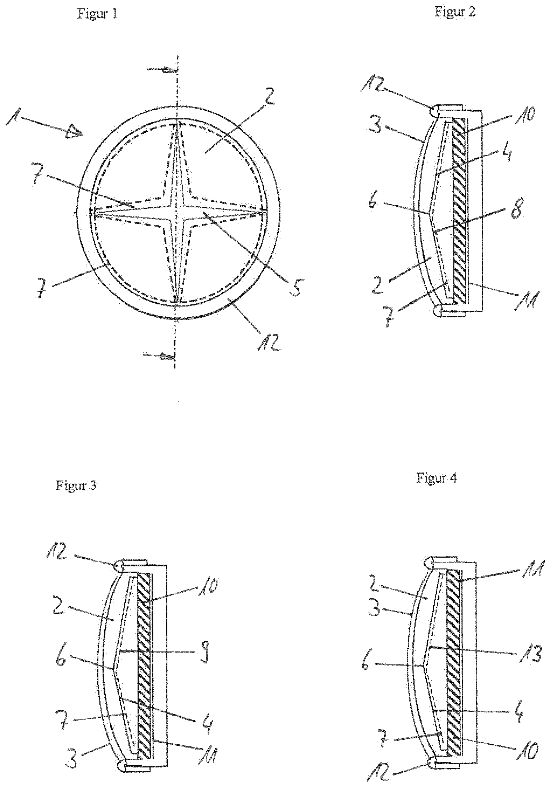

- Fig. 1: in schematischen Darstellungen die Ansicht eines Markenemblems;
- Fig. 2: eine geschnittene Seitenansicht des in Fig. 1 gezeigten vollflächig oder partiell beleuchteten Markenemblems;
- Fig. 3: eine geschnittene Seitenansicht des in Fig. 1 gezeigten vollflächig oder partiell beleuchteten Markenemblems in einer anderen Ausbildung;
- Fig. 4: eine geschnittene Seitenansicht des in Fig. 1 gezeigten vollflächig oder partiell beleuchteten Markenemblems in einer weiteren Ausbildung;

Das ansichtsseitige Bauteil ist im Ausführungsbeispiel als beleuchtetes Markenemblem 1 gewählt. Es umfasst eine transparente Linse 2 aus einem vorzugsweise amorphen Kunststoff wie Polyamid (PA), Polymethymethacrylat (PMMA) oder besonders bevorzugt Polycarbonat (PC) im Spritzpräge, bevorzugt im Spritzguss-Verfahren hergestellt wird. Im Ausführungsbeispiel ist eine zusätzliche Beschichtung 3 auf der Linse 2 vorgesehen, um eine bessere Beständigkeit gegen Umwelt- und / oder Medieneinflüsse zu erzielen.

Die Linse 2 ist im Ausführungsbeispiel ansichtsseitig mit einer konvexen Oberfläche versehen. In Abwandlung des Ausführungsbeispiels kann die Oberfläche aber je nach Wunsch des Fahrzeug-Herstellers konkav oder eben ausgestaltet sein. Rückseitig ist die Linse 2 mit einer Vertiefung 4 gemäß der Kontur des Markenemblems 1 versehen, das im Ausführungsbeispiel die Gestalt eines Sterns hat. Die Kontur ist in ihrer geometrischen Ausgestaltung deutlich flacher ausgelöst als ein herkömmliches Dekorelement nach dem Stand der Technik, da der Blick des Betrachters durch die Linse einen höheren dreidimensionalen Eindruck vermittelt.

Von der rückseitigen Vertiefung 4 der Linse 2 ist gemäß einer nicht zu Erfindung gehörenden Variante ein metall- oder chromoptisches, beschichtetes Dekorelement 5 aufgenommen. Das Dekorelement 5 kann in die Vertiefung 4 eingelegt oder verklebt sein. Die chromoptische Beschichtung 6 des Dekorelementes 5 kann derart gestaltet sein, dass es direkt durchleuchtbar ist. Hierfür sind Abscheidungstechnologien wie PVD, PECVD, CVD und Vakuumbedampfen sowie auch Lackiertechniken besonders geeignet. Die Applizierung der chromoptischen Beschichtung 6 ist auch durch die Übertragung einer metallischen oder metalloptischen Schicht durch Thermotransferverfahren möglich. Ansichtsseitig entsteht durch den Blick durch die transparente Linse 2 auf das beschichtete Dekorelement 5 ein hochwertiger Eindruck. Ebenso schützt die Linse 2 das Dekorelement 5, weshalb auch sonst eher unbeständige, z.B. kratzempfindliche Oberflächenbeschichtungen auf dem Dekorelement 5 möglich sind.

Das Dekorelement 5 kann jedoch auch ein galvanisiertes Bauteil sein, wobei eine vollflächige Galvanisierung oder gar eine auf ein Trägerbauteil aufgebrachte Echtmetallfolie in diesem Ausgestaltungsfall für eine direkte Durchleuchtung ungeeignet ist, da eine Echtmetall sowie eine galvanische Abscheidung lichtundurchlässig ist.

In diesem Fall sind die Bereiche um die rückseitige Vertiefung 4 der Linse 2 mit einer Lackierung oder Beschichtung 6 versehen, welche durchleuchtbar oder deckend dargestellt sind. Je nach Ausgestaltung der Beschichtung 6 des Dekorelementes 5 und der Rückseite der Linse 2 ist eine Lichtdichtigkeit, eine partielle oder eine vollflächige Durchleuchtung des Markenemblems 1 sowie eine Kontur- oder Coronabeleuchtung 7 darstellbar.

Für die Ausgestaltung der Kontur- oder Coronabeleuchtung 7 um das chromoptische Dekorelement 5 wird entweder die rückseitige Fläche der Linse 2 mit Ausnahme der rückseitigen Vertiefung 4 zur Aufnahme des Dekorelement 5 lackiert, wobei die zu durchleuchtenden Flächen transluzent und die unbeleuchteten Flächen deckend dargestellt werden. Besonders bevorzugt ist eine Darstellung mittels einer rückseitig aufgelegten oder hinterspritzten, mit dem Linsenmaterial kompatiblen Folie 8 realisiert. Diese derart ausgebildete Folie wird durch Lackierung oder Bedruckung, bevorzugt durch Siebdruck hergestellt. Der Bereich der Aufnahme des Dekorelementes 5 ist in dieser Ausgestaltung ausgenommen.

Im Fall der Kontur- oder Coronabeleuchtung 7 ist der unmittelbar zum Dekorelement 5 benachbarte Bereich lichtdurchlässig, wohingegen die übrigen Bereiche lichtundurchlässig sind. Folglich ist die Kontur des Dekorelements 5 durch das Licht nachbildbar und somit das Dekorelement 5 - in den Figuren der Stern - bei Dunkelheit nachbildbar.

Gemäß der Erfindung ist es zur Darstellung eines chromoptischen Dekorelementes 5 ohne ein zusätzlich montiertes und dekoriertes Bauteil vorgesehen, die Vertiefung 4 auf der Rückseite der Linse 2 direkt mit einem chromoptischen Lack oder einer Beschichtung 6 zu versehen. Das Dekorelement 5 ist dann von der Beschichtung 6 oder dem chromoptischen Lack imitiert, welche in die rückseitige Vertiefung 4 der Linse 2 appliziert ist. Die Beschichtung 6 kann mit bekannten Verfahren wie PVD, PECVD, CVD oder Vakuumbedampfen erfolgen. Ansichtsseitig würde hier der Eindruck eines zusätzlichen chromoptischen Dekorelementes 5 entstehen. In diesem Fall ist es vorteilhaft, die Rückseite der Linse 2 zuvor um die rückseitige Vertiefung 4 der Linse 2 zu dekorieren, was vorteilhaft durch Bedrucken, Lackieren oder gemäß der Erfindung durch die den Bereich der Vertiefung 4 aussparende Folie 8 erfolgt. Die chromoptische Beschichtung kann dann anschließend ohne Maskieren durchgeführt werden. Eine Kontur- oder Coronabeleuchtung 7 ist auch in dieser Variante realisierbar, indem der unmittelbar zum Dekorelement 5 benachbarte Bereich lichtdurchlässig ausgebildet ist, wohingegen die übrigen Bereiche lichtundurchlässig sind. Folglich ist die Kontur des Dekorelements 5 durch das Licht nachbildbar und somit das Dekorelement 5 - in den Figuren der Stern - bei Dunkelheit nachbildbar.

Die vorstehend angesprochene Folie 8 ist in die rückseitige Vertiefung 4 der Linse 2 eingelegt oder hinterspritzt. Sie enthält eine der Kontur des Dekorelementes 5 folgende Aussparung. Die Beschichtung dieser Folie legt die durchleuchtbaren und nicht durchleuchtbaren Bereiche fest; sie kann bereichsweise transluzent sein.

In einer Abwandlung besteht auch die Möglichkeit, eine beschichtete Folie mit einer zusätzlichen chromoptischen Folie 13 einzulegen oder zu hinterspritzen. Diese Folie 13 stellt dann allein das Dekorelement 5 dar. Sie ist in Kontur verformt und folgt der rückseitigen Vertiefung 4 der Linse 2.

In einer weiteren Abwandlung ist es auch möglich, das chromoptische Dekorelement 5 direkt mit in die Folie 9 zu integrieren. Hierzu wird entweder zuerst oder als zweiter Schritt die Folie 9 um das Dekorelement 5 bedruckt, wobei die Bereiche, welche deckend und transluzent, also durchleuchtbar, dargestellt sind, über die Drucktechnik festgelegt werden. Die Darstellung des chromoptischen Dekorelementes 5 kann mittels Druck, Lackierung, bevorzugt Siebdruck mit einem chromoptischen Lack realisiert werden. Die Folie, meist in Bögen beschichtet, wird anschließend gemäß der rückseitigen Geometrie und Vertiefung der Linse verformt und ausgestanzt. Diese so bereitgelegte Folie 9 wird dann entweder hinter die Linse 2 gelegt oder verklebt oder durch Kunststoffspritzguss direkt und unlösbar mit der Linse 2 verbunden.

Auf der Rückseite der Linse 2 ist eine Beleuchtungsquelle 10 vorgesehen, die an einem Trägerteil 11 angeordnet ist. Die Beleuchtungsquelle 10 und das Trägerteil 11 sind mit der Linse 2 zu einer Bauteilgruppe zusammengefasst. Im Ausführungsbeispiel sind ringförmig die Linse 2 umgebend chromoptische Elemente 12 in Form von Blenden oder Rahmen angebracht.

Beim Hinterspritzvorgang im Kunststoffspritzguss wird das mit den Farbpigmenten versehene Folieninsert 8, 9 und 13 in eine Form eingelegt und das Kunststoffmaterial wird in fließfähigem Zustand eingebracht. Die in der Werkzeugkavität positionierte Folie 8, 9 und 13 wird dabei entsprechend dem Verlauf der Form präzise ausgeformt, wobei das Kunststoffmaterial nach dem Erstarren oder Aushärten mit dem Folieninsert und den Farbpigmente ein unlösbares Bauteil bildet.

Hinter diesem Verbund wird anschließend die Beleuchtungseinheit 10 in Form eines lichtauskoppelnden Lichtleiters gesetzt. Ebenso denkbar ist der Einsatz einer Elektrolumineszenzfolie. Im unbeleuchteten Zustand ist ansichtsseitig somit nur das chromoptische Dekorelement 5 durch die transparente Linse 2 in einer farblichen Umgebung zu sehen, während bei eingeschaltetem Licht die eigens zur Durchleuchtung transluzent dargestellten Bereiche Licht durchlassen.

Abschließend wird zum Schutz der Dekoration und der für die Beleuchtung notwendigen Elektronik ein weiteres Bauteil als Trägerbauteil 11 hinter dem beschriebenem Verbund, also der Linse 2, dem chromoptischen Dekorelement 5 sowie der Beleuchtungseinheit 10 gesetzt und bevorzugt staub- und wasserdicht mit einander durch Verschweißen oder Verkleben verbunden.

Mit dem beschriebenen Verfahren ist es möglich, in nur wenigen Fertigungsschritten ein ansichtsseitiges dreidimensionales, vollflächig oder partiell beleuchtetes Markenemblem 1 auf einfache und elegante Weise zu fertigen.

Die Montage weiterer, chromoptischer Elemente 12, z.B. umlaufend um die Linse 2 wird mittels bekannter und herkömmlicher Montageverfahren dargestellt. Der Ring kann jedoch auch direkt mit der transparenten Linse 2 im Mehrkomponentenspritzguss hergestellt sein, wobei die anschließende Dekoration nur auf dem Ring ausgeführt wird.

Bei dem Verfahren entfallen verglichen mit dem Stand der Technik nicht nur verschiedene Arbeitsschritte. Vielmehr zeichnet sich das fertige Produkt insbesondere dadurch aus, dass durch das Miteinander-Verbinden der verschiedenen Kunststoffmaterialien das vollflächig oder partiell beleuchtete Markenemblem 1 auch hohen mechanischen Belastungen widerstehen kann.

Die Kontur ist in ihrer geometrischen Ausgestaltung deutlich flacher ausgelöst als ein herkömmliches Dekorelement nach dem Stand der Technik, da der Blick des Betrachters durch die Linse einen höheren dreidimensionalen Eindruck vermittelt. Während Dekorelemente nach dem Stand der Technik üblicherweise eine Höhe von ca. 10 mm aufweisen, beträgt die Höhe des Dekorelements 5 nach der Erfindung lediglich 2 bis 3 mm. Folglich ist die Kontur des Dekorelements auch bei einem seitlichen Blick auf das Markenemblem nicht bereichsweise verdeckt sondern vollständig sichtbar. Aufgrund der gerundeten Form der Linse auf ihrer Ansichtsseite ist wesentlich tieferer dreidimensionaler Effekt des Dekorelementes 5 hervorgerufen, als dies tatsächlich der Fall ist.

## Patentansprüche

1. Vollflächig oder partiell beleuchtetes Markenemblem (1), welches unabhängig vom Betrachtungswinkel für den Einsatz im Interieur sowie im Exterieur im Automobilsektor einsetzbar ist, welches eine transparente Linse (2) aufweist, welche zusammen mit einem anschließend rückseitig montierten Trägerteil (11) und einer Beleuchtungsquelle (10) zu einer Bauteilgruppe zusammengefasst ist, wobei in eine rückseitige Vertiefung (4) der Linse (2) ein chromoptischer Lack oder eine Beschichtung (6) appliziert ist, welcher oder welche durchleuchtbar dargestellt ist und welcher oder welche das metalloptische Dekorelement (5) imitiert und wobei auf die Rückseite der Linse (2) eine beschichtete Folie (8) eingelegt oder hinterspritzt ist, welche eine der Kontur des Dekorelementes (5) folgende Aussparung enthält, und wobei die Beschichtung dieser Folie durchleuchtbare und nicht durchleuchtbare Bereiche festlegt.

2. Vollflächig oder partiell beleuchtetes Markenemblem (1) nach Anspruch 1, **dadurch gekennzeichnet, dass** die Linse (2) ansichtsseitig eine Beschichtung (3) aufweist.

3. Vollflächig oder partiell beleuchtetes Markenemblem (1) nach Anspruch 1 oder 2, **dadurch gekennzeichnet, dass** je nach Ausgestaltung der Beschichtung des Dekorelementes (5) und der Rückseite der Linse (2) eine Lichtdichtigkeit oder eine partielle oder vollflächige Durchleuchtung sowie eine Kontur- oder Coronabeleuchtung (7) darstellbar ist.

4. Vollflächig oder partiell beleuchtetes Markenemblem (1) nach einem der vorhergehenden Ansprüche, **dadurch gekennzeichnet, dass** zusätzlich chromoptische Elemente (12) in Form von Blenden oder Rahmen angebracht sind.

## Claims

1. Full-surface or partially backlit manufacturer's emblem (1), which, irrespective of the viewing angle, can be used in the interior as well as exterior in the automotive sector, which has a transparent lens (2), which is combined together with a carrier part (11) subsequently mounted on the rear side and a light source (10) to form a component assembly, wherein in a recess (4) on the rear side of the lens (2) a chrome-optic lacquer or a coating (6) is applied, which is represented in a transilluminable manner and which imitates the metal optical decorative element (5) and wherein on the rear side of the lens (2) a coated film (8) is inserted or backinjected, which includes a recess following the contour of the decorative element (5) and wherein the coating of said film defines translucent and non-translucent areas.

2. Full-surface or partially backlit manufacturer's emblem (1) according to claim 1, **characterised in that** the lens (2) has a coating (3) on the visible side.

3. Full-surface or partially backlit manufacturer's emblem (1) according to claim 1 or 2, **characterised in that**, depending on the design of the coating of the decorative element (5) and the rear side of the lens (2), a lighttightness or a partial or full-surface transillumination as well as a contour or corona lighting (7) is representable.

4. Full-surface or partially backlit manufacturer's emblem (1) according to one of the previous claims, **characterised in that** chrome-optic elements (12) in the form of bezels or frames are additionally mounted.

## Revendications

1. Emblème de marque (1) rétroéclairé sur tout ou partie de sa surface, utilisable, indépendamment de l'angle d'observation, à l'intérieur comme à l'extérieur dans le secteur automobile, lequel emblème présente une lentille (2) transparente qui, avec une partie support (11) ensuite montée au dos et avec une source d'éclairage (10), est réunie pour former un ensemble d'éléments, sachant que dans un creux (4) dorsal de la lentille (2) est appliquée une laque chromoptique ou un revêtement (6), laquelle ou lequel est représenté-e éclairable par transparence et imite l'élément décor (5) métallo-optique et sachant qu'au dos de la lentille (2) a été inséré ou pulvérisé un film (8) avec revêtement qui contient un évidement suivant le contour de l'élément décoratif (5), et sachant que le revêtement de ce film définit des zones éclairables et non éclairables par transparence.

2. Emblème de marque (1) rétroéclairé sur tout ou partie de sa surface selon la revendication 1, **caractérisé en ce que** la lentille (2) présente un revêtement du côté s'offrant à la vue.

3. Emblème de marque (1) rétroéclairé sur tout ou partie de sa surface selon la revendication 1 ou 2, **caractérisé en ce que** suivant la configuration du revêtement de l'élément de décoration (5) et du verso de la lentille (2), une densité de lumière ou un éclairage par transparence de tout ou partie de la surface ainsi qu'un éclairage en contour ou en couronne (7) est représentable.

4. Emblème de marque (1) rétroéclairé sur tout ou partie de sa surface selon l'une des revendications précédentes, **caractérisé en ce qu'**en plus sont montés des éléments chromoptiques (12) sous forme de bandeaux ou de cadres.
